(19) **Europäisches Patentamt**

**European Patent Office**

**Office européen des brevets**

(11) **EP 1 665 702 B1**

(12) **EUROPÄISCHE PATENTSCHRIFT**

(45) Veröffentlichungstag und Bekanntmachung des Hinweises auf die Patenterteilung:
**06.12.2006 Patentblatt 2006/49**

(21) Anmeldenummer: **04762668.4**

(22) Anmeldetag: **16.08.2004**

(51) Int Cl.:
*H04L 27/233* (2006.01)    *H04L 27/156* (2006.01)

(86) Internationale Anmeldenummer:
**PCT/DE2004/001824**

(87) Internationale Veröffentlichungsnummer:
**WO 2005/027452 (24.03.2005 Gazette 2005/12)**

(54) **VERFAHREN ZUR REKONSTRUKTION VON NULLDURCHGANGSINFORMATION VON VERRAUSCHTEN WINKELMODULIERTEN SIGNALEN NACH EINER LIMITER-DISKRIMINATOR-SIGNALVERARBEITUNG**

METHOD FOR THE RECONSTRUCTION OF ZERO CROSSING INFORMATION OF NOISY ANGLE-MODULATED SIGNALS FOLLOWING LIMITER-DISCRIMINATOR SIGNAL PROCESSING

PROCEDE DE RECONSTRUCTION D'INFORMATIONS DE PASSAGE AU POINT ZERO RELATIVES A DES SIGNAUX BRUYANTS A MODULATION ANGULAIRE A L'ISSUE D'UN TRAITEMENT DE SIGNAL PAR UN LIMITEUR-DISCRIMINATEUR

(84) Benannte Vertragsstaaten:
**DE FR GB**

(30) Priorität: **12.09.2003 DE 10342193**

(43) Veröffentlichungstag der Anmeldung:
**07.06.2006 Patentblatt 2006/23**

(73) Patentinhaber: **Infineon Technologies AG**
**81669 München (DE)**

(72) Erfinder: **NIEDERHOLZ, Jürgen**
**47647 Kerken (DE)**

(74) Vertreter: **Graf Lambsdorff, Matthias et al**
**Patentanwälte**
**Lambsdorff & Lange**
**Dingolfinger Strasse 6**
**81673 München (DE)**

(56) Entgegenhaltungen:
**EP-A- 0 529 986        US-A1- 2002 150 172**

**EP 1 665 702 B1**

**Beschreibung**

Die Erfindung betrifft ein Verfahren und eine Vorrichtung zur Erzeugung einer rauschreduzierten Signalfolge aus einer verrauschten Signalfolge bestehend aus Werten, die für die zeitliche Lage von Durchgängen eines verrauschten winkelmodulierten Signals durch einen Schwellwert charakteristisch sind.

Insbesondere im Bereich der Mobilfunktechnik werden Empfängerkonzepte eingesetzt, die die Schätzung der gesendeten digitalen Datensymbole von CPFSK-(Continuous Phase Frequency Shift Keying) oder winkelmodulierten Signalen auf der Basis einer Sequenz von Nulldurchgängen ermöglichen. Diese Nulldurchgangs-Sequenz wird dabei aus dem Ausgangssignal eines Limiters mit einem nachgeschalteten Zähldiskriminator abgeleitet. Das Konzept, für die Datendetektion eine Nulldurchgangs-Sequenz zu verwenden, ist insbesondere unter Aufwands- und Kostengesichtspunkten interessant, da es ermöglicht, auf einen (teuren) Analog-Digital-Wandler zu verzichten.

Aus der Patentschrift US 2002/0150172 ist ein Verfahren zur Demodulation eines CPFSK-Signals unter Verwendung eines Nulldurchgängedetektors und einer Filterung zur Rauschreduzierung der durch den Nulldurchgängedetektor erzeugten Signalfolge bekannt.

Aus der Druckschrift DE 012 14 581.4, welche am Anmeldetag des vorliegenden Schutzrechtes noch nicht veröffentlicht war, ist ein Zwischenfrequenzempfänger bekannt, welcher zur Signaldetektion einen Nulldurchgangs-Detektor verwendet. Zu diesem Zweck wird die von dem Limiter-Diskriminator ausgegebene Folge von Nulldurchgangsabständen in einer Schieberegisterkette in digitaler Form gespeichert und in einer Klassifizierungs-Einheit mit vorab gespeicherten Nulldurchgangs-Referenzsequenzen verglichen. Die Datendetektion auf der Basis der Folge von Nulldurchgangsabständen erfolgt in der Weise, dass diejenige vorab gespeicherte Nulldurchgangs-Referenzsequenz, welche die kleinste Distanz zu der gemessenen Nulldurchgangs-Sequenz aufweist, ausgewählt wird. Das dieser ausgewählten Nulldurchgangs-Referenzsequenz entsprechende Symbol bzw. die dieser Nulldurchgangs-Referenzsequenz entsprechenden Symbole stellt bzw. stellen das detektierte Symbol bzw. die detektierten Symbole dar.

Eine Schwierigkeit dieser auf der Auswertung einer gemessenen Nulldurchgangs-Sequenz beruhenden Empfängerkonzepte besteht darin, dass additives Kanalrauschen sich auf die Nulldurchgangs-Sequenz auswirkt, und zwar unter anderem in der Weise, dass zusätzliche Nulldurchgänge erzeugt werden. Diese zusätzlichen Nulldurchgänge stellen Störungen dar, die sich auf die Leistungsfähigkeit eines jeden die Nulldurchgangs-Sequenz auswertenden Detektionsverfahrens nachteilig auswirken. Unabhängig von der Art des dem Limiter-Diskriminator nachgeschalteten Datendetektors ist es daher wünschenswert, diejenigen Nulldurchgänge in der Nulldurchgangs-Sequenz, welche auf Rauschen zurückzuführen sind, zu eliminieren.

Eine Möglichkeit zur Unterdrückung der durch Rauschen verursachten zusätzlichen Nulldurchgängen in der Nulldurchgangs-Sequenz besteht darin, das von dem Limiter ausgegebene zweiwertige Signal abzutasten und die rauschbedingten schnellen Flankenwechsel in diesem Signal durch Filterung zu eliminieren. Eine Zähldiskrimination findet hier nicht statt. Nachteilig ist, dass eine Abtastung des limitierten Signals erforderlich wird. Ferner lässt sich zeigen, dass durch eine (lineare) Filterung eine optimale Rauschunterdrückung eines von einem Limiter erzeugten Signals prinzipiell nicht möglich ist.

Der Erfindung liegt die Aufgabe zugrunde, ein Verfahren und eine Vorrichtung zur Erzeugung einer rauschreduzierten Schwellwertdurchgangs-Signalfolge aus einer verrauschten Schwellwertdurchgangs-Signalfolge anzugeben, in welchem bzw. in welcher die durch Rauschen verursachten Schwellwertdurchgänge weitestgehend oder vollständig eliminiert sind.

Die der Erfindung zugrunde liegende Aufgabenstellung wird durch die Merkmale der unabhängigen Ansprüche gelöst. Vorteilhafte Ausgestaltungen und Weiterbildungen der Erfindung sind in den Unteransprüche angegeben.

Gemäß Anspruch 1 wird in einem ersten Schritt (a) zu einem Wert der verrauschten Signalfolge entschieden, ob ein Wert der rauschreduzierten Signalfolge erzeugt werden soll. Es wird also festgestellt, ob der betrachtete Wert der verrauschten Signalfolge auf Rauschen zurückzuführen ist oder einem regulären Schwellwertdurchgang des winkelmodulierten Signals entspricht. In einem zweiten Schritt (b) wird die rauschreduzierte Signalfolge durch einen neuen Wert aktualisiert, sofern zu dem Wert der verrauschten Signalfolge ein Wert der rauschreduzierten Signalfolge erzeugt werden soll. Dieser Wert der rauschreduzierten Signalfolge wird unter Berücksichtigung von früheren Werten der verrauschten Signalfolge berechnet, zu denen keine Werte der rauschreduzierten Signalfolge erzeugt wurden.

Bei der Erfindung wird also das limitierte und diskriminierte Signal durch einen weiteren Signalverarbeitungsprozess von Rauschen befreit. Gemäß dem Schritt (a) beruht dieser Signalverarbeitungsprozess auf einer nicht-linearen Abbildung der verrauschten Signalfolge auf die rauschreduzierte bzw. von Rauschen befreite Signalfolge. Damit berücksichtigt der erfindungsgemäße Algorithmus die spezifische Auswirkung der Nicht-Linearität des Limiters auf das phasenmodulierte Signal. Ferner wird gemäß dem Schritt (a) erreicht, dass die entrauschte Signalfolge dieselbe Anzahl von Werten wie die ideale Signalfolge aufweist, welche durch das winkelmodulierte Signal ohne Rauschen erzeugt würde. In Schritt (b) wird dann der Einfluss des Rauschens bei der Berechnung der Werte der rauschreduzierten Signalfolge berücksichtigt.

Vorzugsweise wird der Schritt (a) in der Weise durchgeführt, dass die Werte der verrauschten Signalfolge mit

2

einem Entscheidungs-Schwellwert verglichen werden. Sofern der Wert der verrauschten Signalfolge größer als der Entscheidungs-Schwellwert ist, wird entschieden, dass zu diesem Wert ein Wert der rauschreduzierten Signalfolge zu erzeugen ist. Andernfalls wird entschieden, dass zu diesem Wert kein Wert der rauschreduzierten Signalfolge erzeugt werden soll. Der Schwellwert sollte dabei so gewählt sein, dass er eine sichere Unterscheidung zwischen durch Rauschen verursachten Werten der verrauschten Signalfolge und regulären Werten der verrauschten Signalfolge ermöglicht.

Vorzugsweise ist das winkelmodulierte Signal ein CPFSK-moduliertes Signal, insbesondere ein GFSK-(Gaussian Frequency Shift Keying)-moduliertes Signal. Diese Modulationsformen werden in Bluetooth- oder DECT-Systemen eingesetzt, in welchen das erfindungsgemäße Verfahren vorzugsweise zum Einsatz kommt.

Die erfindungsgemäße Vorrichtung zur Erzeugung einer rauschreduzierten Signalfolge, welche vorzugsweise einer Limiter-Diskriminator-Schaltung nachgeschaltet ist, weist ein Mittel zum Entscheiden auf, ob zu einem Wert der verrauschten Signalfolge ein Wert der rauschreduzierten Signalfolge erzeugt werden soll. Ferner umfasst die Vorrichtung ein Mittel zum Berechnen dieses Wertes der rauschreduzierten Signalfolge unter Berücksichtigung von früheren Werten der verrauschten Signalfolge, zu denen keine Werte der rauschreduzierten Signalfolge erzeugt wurden, sowie ein Mittel zum Aktualisieren der rauschreduzierten Signalfolge durch den berechneten Wert. Durch diese "De-Noising"-Signalverarbeitungsstufe wird eine Folge von Schwellwertdurchgängen auf nicht-lineare Weise von durch Rauschen induzierte Schwellwertdurchgängen befreit.

Die Erfindung wird nachfolgend anhand eines Ausführungsbeispiels unter Bezugnahme auf die Zeichnungen näher erläutert; in diesen zeigt:

Fig. 1    ein Modell des Übertragungssystems bestehend aus Sender, Kanal und Empfänger ohne die erfindungsgemäße Vorrichtung zur Rauschreduzierung;

Fig. 2    ein die Empfängerseite repräsentierender Teil des in Fig. 1 dargestellten Modells mit einer erfindungsgemäßen Vorrichtung zur Rauschreduzierung;

Fig. 3    ein Diagramm, in welchem ein unverrauschtes und ein verrauschtes CPFSK-moduliertes Zwischenfrequenzsignal über der Zeit dargestellt sind;

Fig. 4    einen Ausschnitt aus Fig. 3;

Fig. 5    ein Diagramm, in welchem die Nulldurchgangsabstände des unverrauschten Zwischenfrequenzsignals aus Fig. 3 über dem Zählindex j dargestellt sind;

Fig. 6    ein Diagramm, in welchem die Nulldurchgangsabstände des verrauschten Zwischenfrequenzsignals aus Fig. 3 über dem Zählindex j dargestellt sind;

Fig. 7    ein normiertes Histogramm zur Darstellung der Wahrscheinlichkeitsdichtefunktion $p_u(x)$ des unverrauschten CPFSK-modulierten Zwischenfrequenzsignals;

Fig. 8    ein normiertes Histogramm zur Darstellung der Wahrscheinlichkeitsdichtefunktion $p_u(x)$ des verrauschten CPFSK-modulierten Zwischenfrequenzsignals; und

Fig. 9    ein Ablaufdiagramm des erfindungsgemäßen Algorithmus zur Rauschreduzierung.

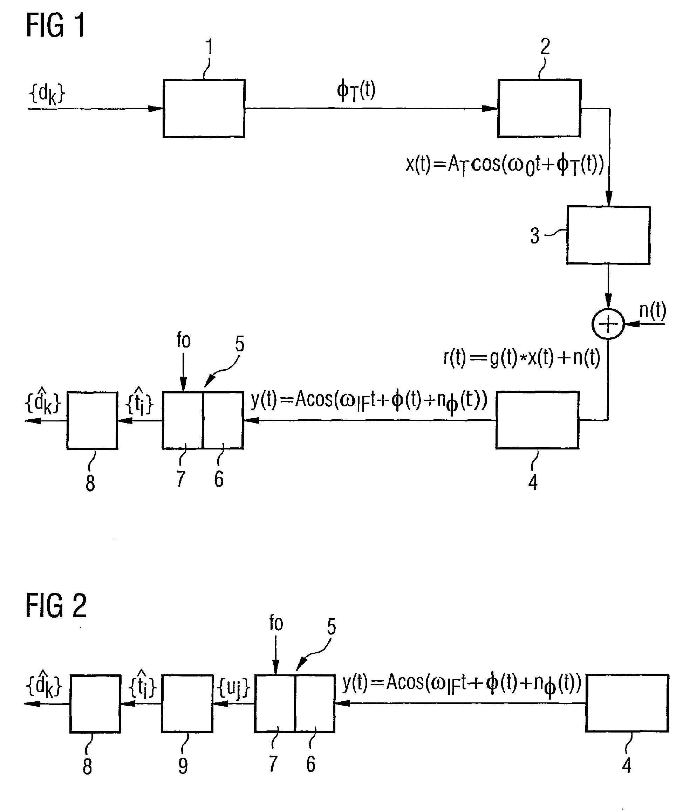

Fig. 1 zeigt ein Modell eines winkelmodulierenden Übertragungssystems. Die zu übertragende Datensymbolfolge $\{d_k\}$ wird senderseitig einem Modulator 1 zugeleitet. In dem Modulator 1 wird eine geeignete Modulation, beispielsweise CPFSK-Modulation, durchgeführt. Die von dem Modulator 1 bereitgestellte Phasenfunktion $\phi_T(t)$ wird einem Hochfrequenzteil 2 des Senders zugeleitet. Das Hochfrequenzteil 2 strahlt über eine Antenne (nicht dargestellt) ein reellwertiges Hochfrequenzsignal x(t) ab, wobei in Fig. 1 mit $A_T$ die Signalamplitude und mit $\omega_0$ die Trägerfrequenz bezeichnet werden.

Das Hochfrequenzsignal x(t) wird über einen Mehrwegekanal 3 übertragen, welcher spektral und zeitlich als dispersionsfrei angenommen werden kann. Das Übertragungsverhalten des Mehrwegekanals 8 wird durch die Impulsantwort g(t) angegeben. Zudem wird das übertragene Hochfrequenzsignal durch additives Kanalrauschen, dargestellt durch die Funktion n(t), überlagert.

Das von einem empfängerseitigen Hochfrequenzteil 4 über eine Antenne (nicht dargestellt) empfangene Empfangssignal r(t) ergibt sich durch eine Faltung der Impulsantwort g(t) mit dem abgestrahlten Signal x(t) zuzüglich dem Rauschbeitrag n(t). In dem Hochfrequenzteil 4 des Empfängers wird dieses Signal in ein Zwischenfrequenzsignal y(t) heruntergemischt. Dabei bezeichnen in Fig. 1 A die Amplitude des Zwischenfrequenzsignals, $\omega_{IF}$ die Winkelfrequenz

des Zwischenfrequenzsignals, $\phi(t)$ die Phasenfunktion und $n_\phi(t)$ einen Phasenrauschbeitrag dieses Signals.

Das Zwischenfrequenzsignal y(t) wird von einem Detektor für Nulldurchgänge 5 entgegengenommen, welcher aus einem Limiter 6 und einem dem Limiter 6 nachgeschalteten Zähler 7 besteht. Der Limiter 6 erzeugt ein zweiwertiges Signal, etwa in der Form, dass der Limiter-Ausgang den Wert 1 annimmt, sofern y(t) > 0, und den Wert -1 annimmt, sofern y(t) ≤ ist. Nulldurchgänge des Zwischenfrequenzsignals y(t) entsprechen damit Nulldurchgängen des Signals am Ausgang des Limiters 6, wobei die Übertragungsfunktion des Limiters ersichtlich nichtlinear ist.

Der Zähler 7 erzeugt aus dem Ausgangssignal des Limiters eine Sequenz $\{\hat{t}_i\}$ von Werten $\hat{t}_i$, die für die zeitlich Lage der Nulldurchgänge des Zwischenfrequenzsignals y(t) charakteristisch sind. Dies kann beispielsweise dadurch erfolgen, dass der Zähler 7 die zeitlichen Abstände zwischen aufeinander folgenden Nulldurchgangs-Zeitpunkten als Werte $\hat{t}_i$ ausgibt. Zu diesem Zweck wird dem Zähler 7 eine Zählfrequenz $f_0$ zugeführt, welche wesentlich höher als die zu erwartende Frequenz der Nulldurchgänge des Zwischenfrequenzsignals y(t) ist. Der Zähler 7 wird durch jede Flanke des Ausgangssignals des Limiters 6 auf den Wert Null zurückgesetzt, wobei der zuvor erreichte Zählerstand als Null-durchgangsabstand $\hat{t}_i$ ausgegeben wird. Andere Formen der Erzeugung von Nulldurchgangsinformation - z.B. durch eine kontinuierliche Zählung mit Ausgabe der Zählwerte bei Nulldurchgängen und einer Zurücksetzung des Zählers z.B. im Symboltakt - sind ebenfalls möglich.

Die auf diese Weise ermittelte Folge von Nulldurchgangsabständen $\{\hat{t}_i\}$ wird einem Datendetektor 8 zugeleitet, welcher auf der Basis der Folge $\{\hat{t}_i\}$ eine Rekonstruktion der gesendeten Daten in Form der Folge $\{\hat{d}_k\}$ erzeugt.

Fig. 2 zeigt den empfängerseitigen Teil der in Fig. 1 dargestellten Signalverarbeitung gemäß der Erfindung. Dieselben Teile wie in Fig. 1 sind mit denselben Bezugszeichen bezeichnet. Zwischen dem Ausgang des Detektors 5 für Nulldurchgänge und dem Eingang 8 des Datendetektors ist eine zusätzliche Signalverarbeitungsstufe in Form einer Rauschreduzierungsschaltung 9 angeordnet.

Es wird darauf hingewiesen, dass die Rauschreduzierungsschaltung 9 für beliebige Datendetektoren 8, die Nulldurchgangsfolgen (oder allgemeiner: Schwellwertdurchgangsfolgen) als Eingangssignal verarbeiten, einsetzbar ist.

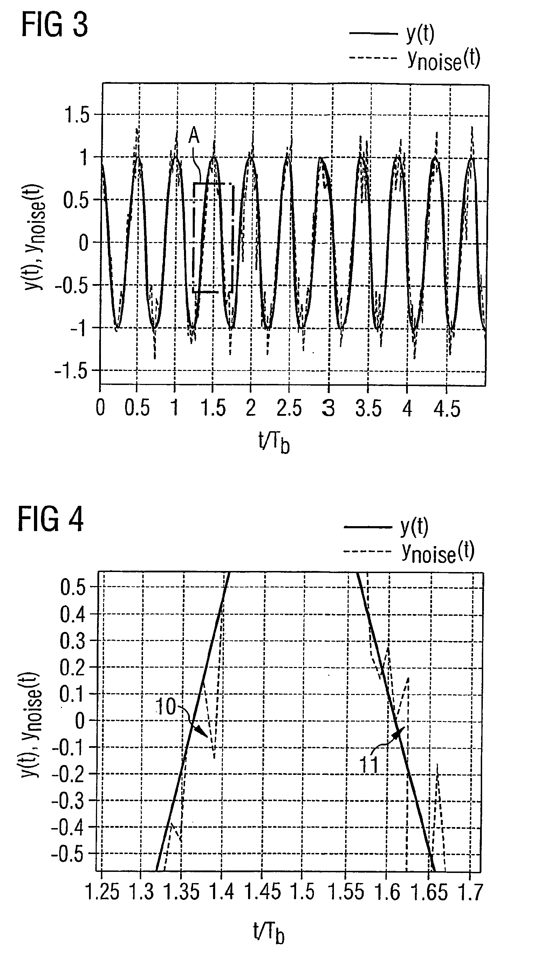

Die Folge $\{u_j\}$ gibt die von dem Detektor 5 für Nulldurchgänge ausgegebene Folge von Nulldurchgangsabständen an. Diese Folge enthält sowohl die regulären Nulldurchgangsabstände als auch Nulldurchgangsabstände, die durch das additive Rauschen n(t) bewirkt werden. In den Figuren 3 bis 8 wird der Einfluss des additiven Rauschens n(t) auf das Auftreten von (zusätzlichen) Nulldurchgangsabständen erläutert.

Fig. 3 zeigt das unverrauschte CPFSK-modulierte Zwischenfrequenzsignal y(t) und das verrauschte CPFSK-modulierte Zwischenfrequenzsignal $y_{noise}(t)$ aufgetragen gegenüber der Zeit t in Einheiten der Symboldauer (Bitdauer) $T_b$.

Fig. 4 zeigt den Einfluss des Rauschens auf das Auftreten von Nulldurchgängen. Bezüglich der aufsteigenden Signalflanke treten bei dem Bezugszeichen 10 neben dem regulären Nulldurchgang noch zwei weitere Nulldurchgänge auf, die durch eine signalvermindernde Rauschspitze erzeugt werden. Bezüglich der abfallenden Signalflanke tritt bei dem Bezugszeichen 11 lediglich ein Nulldurchgang auf, welcher durch eine signalerhöhende Rauschspitze zu höheren Zeiten verschoben ist. Es treten also grundsätzlich zwei mögliche Rauscheinflüsse auf: Entweder entstehen neue Nulldurchgänge oder der Nulldurchgang verschiebt sich.

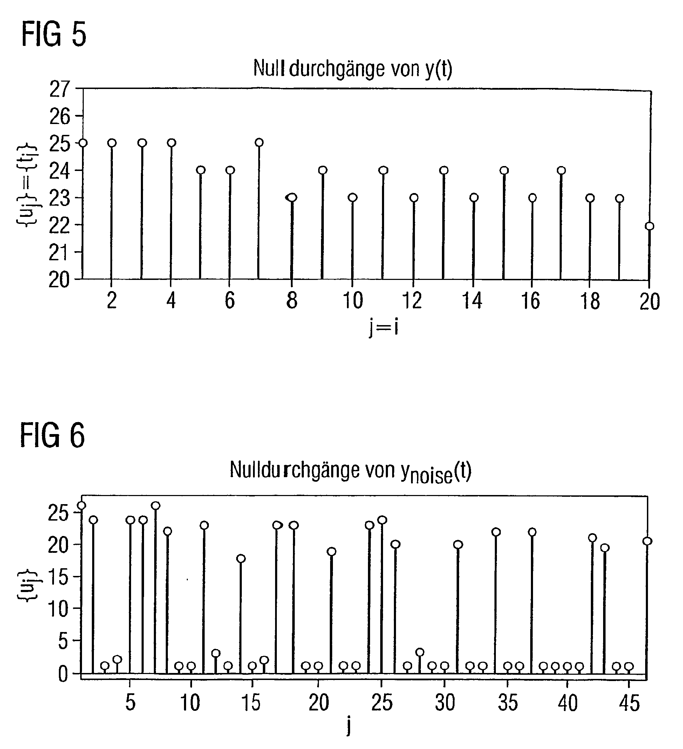

In den Figuren 5 und 6 sind die Nulldurchgangsabstände (Zählerstände) $u_j$ gegenüber dem Index j des Nulldurchgangs aufgetragen. Fig. 5 betrifft den rauschfreien Fall, d.h. es gilt $\{u_j\} = \{t_i\}$, wobei mit $\{t_i\}$ die Folge der rauschfreien Nulldurchgangsabstände bezeichnet wird. Fig. 6 zeigt, dass der additive Rauschbeitrag n(t) zu zusätzlichen Nulldurchgängen mit geringen Abständen in der verrauschten Folge von Nulldurchgangsabständen $\{u_j\}$ führt.

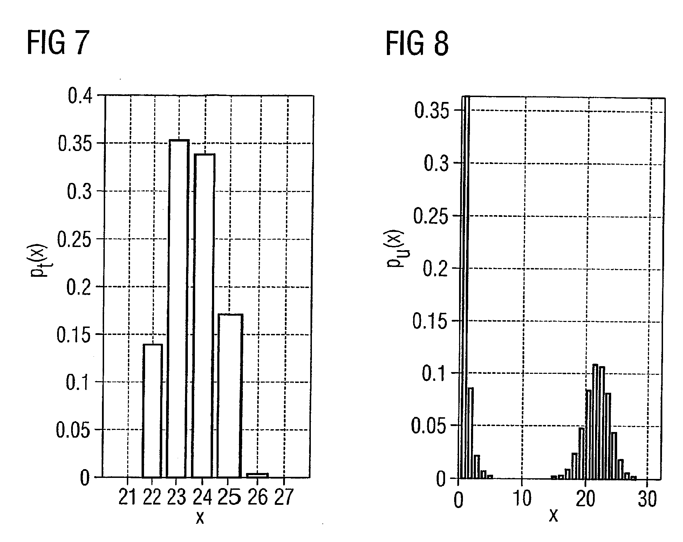

In den Figuren 7 und 8 sind die entsprechenden Häufigkeitsverteilungen als Schätzungen der Wahrscheinlichkeitsdichtefunktionen von unverrauschten und verrauschten CPFSK-modulierten Zwischenfrequenzsignalen dargestellt. Fig. 7 betrifft den Fall eines unverrauschten Zwischenfrequenzsignals mit der Wahrscheinlichkeitsdichtefunktion $p_t(x)$. Fig. 8 zeigt die Wahrscheinlichkeitsdichtefunktion $p_u(x)$ eines verrauschten CPFSK-modulierten Zwischenfrequenzsignals. Die Variable x gibt den Abstand (Zählwert des Zählers 7) zwischen zwei aufeinander folgenden Nulldurchgängen an. Es wird deutlich, dass der additive Rauschbeitrag zu einer hohen Anzahl von kleinen Nulldurchgangsabständen im Bereich etwa von 1 bis 5 Zählwerten und zu einer Verbreiterung der Wahrscheinlichkeitsdichtefunktion im Bereich der regulären Nulldurchgangsabstände führt.

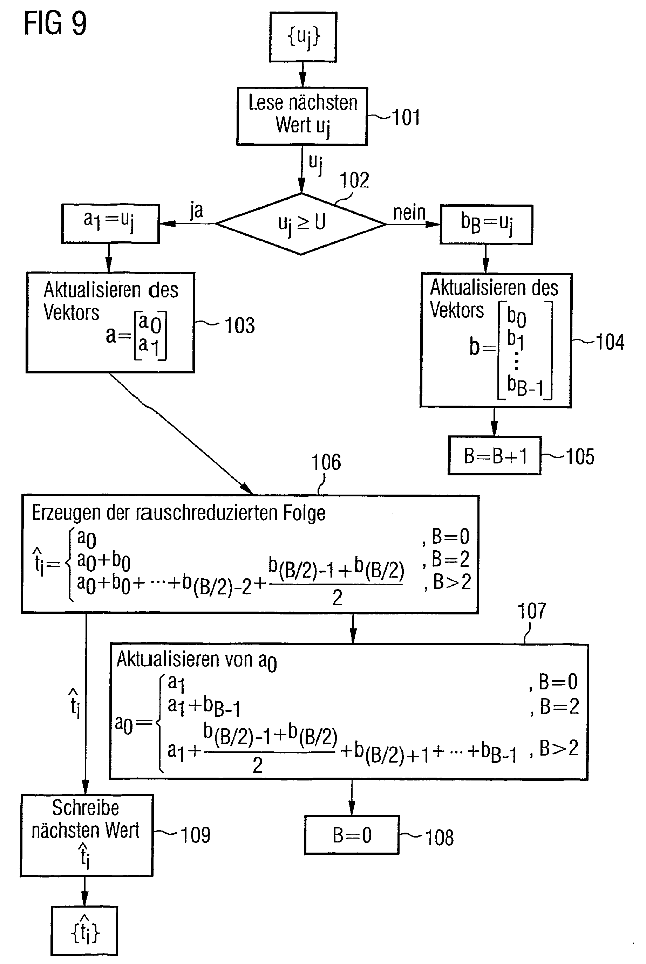

Fig. 9 zeigt ein Ablaufdiagramm des erfindungsgemäßen Verfahrens zur Berechnung der vom Rauschen befreiten Nulldurchgangsfolge $\{\hat{t}_i\}$ aus der verrauschten Nulldurchgangsfolge $\{u_j\}$. Das Verfahren beruht auf der durch Fig. 8 gestützten Hypothese, dass die Wahrscheinlichkeitsdichtefunktion $p_u(x)$ der Folge $\{u_j\}$ bimodal ist. Es wird angenommen, dass Werte (d.h. Nulldurchgangsabstände) oberhalb eines Schwellwertes U durch den Rauscheinfluss nur verlängert oder verkürzt worden sind. Werte unterhalb dieses Schwellwertes U sind gemäß der Hypothese auf zusätzliche rauschbedingte Nulldurchgänge zurückzuführen.

Für diese Signalmodellierung werden Annahmen gemacht, die von üblichen Empfänger-Frontends mit sehr vertretbarem Aufwand gut erfüllt werden können. So ist die Zwischenfrequenz, auf die das Empfangssignal vor der Limitierung heruntergemischt wird, unter Berücksichtigung des Modulationshubs und einem "worst-case" Signal-zu-Rauschleistungsverhältnis so gewählt, dass die oben genannte Hypothese mit guter Genauigkeit zutrifft. Unter dem worst-case Signal-zu-Rauschleistungsverhältnis wird dasjenige Signal-zu-Rauschleistungsverhältnis verstanden, welches für das Erreichen einer geforderten (praktisch sinnvollen, minimalen) Bit-Fehlerrate nötig ist.

In einem ersten Schritt 101 wird der nächste Wert $u_j$ von dem Zähler 7 entgegengenommen bzw. gelesen. In Schritt 102 wird entschieden, ob zu diesem Wert $u_j$ ein Wert der Ausgabefolge $\{\hat{t}_i\}$ erzeugt werden soll oder nicht. Zu diesem Zweck wird der Wert $u_j$ mit dem Entscheidungs-Schwellwert U verglichen. Ist $u_j \geq U$, so wird der Wert $u_j$ als Komponente $a_1$ in einen [$2\times1$] Vektor **a** eingetragen (Schritt 103). Andernfalls wird $u_j$ als letztes Element $b_B = u_j$ in einen [$B\times1$] Vektor b eingetragen, siehe Schritt 104. Anschließend wird B in Schritt 105 um 1 inkrementiert. In dem Vektor **b** werden also diejenigen Nulldurchgangsabstände abgespeichert, die gemäß der Entscheidung in Schritt 102 auf Rauschen zurückzuführen sind.

Die Berechnung eines Wertes $\hat{t}_i$ der entrauschten Folge $\{\hat{t}_i\}$ erfolgt im Schritt 106 nach der folgenden Gleichung

$$\hat{t}_i = \begin{cases} a_0 & , B = 0 \\ a_0 + b_0 & , B = 2 \\ a_0 + b_0 + \ldots + b_{(B/2)-2} + \dfrac{b_{(B/2)-1} + b_{(B/2)}}{2} & , B > 2 \end{cases} \quad .$$

Diese Gleichung berücksichtigt, dass die Anzahl der Nulldurchgänge zwischen zwei regulären Nulldurchgängen unter der genannten Hypothese immer ungerade sein muss. B ist daher immer eine gerade ganze Zahl.

Anschließend wird das Vektorelement $a_0$ entsprechend

$$a_0 = \begin{cases} a_1 & , B = 0 \\ a_1 + b_{B-1} & , B = 2 \\ a_1 + \dfrac{b_{(B/2)-1} + b_{(B/2)}}{2} + b_{(B/2)+1} + \ldots + b_{B-1} & , B > 2 \end{cases}$$

neu berechnet (Schritt 107) und B = 0 gesetzt (Schritt 108). Der neu berechnete Wert $\hat{t}_i$ wird in Schritt 109 am Ausgang der Rauschreduzierungsschaltung 9 ausgegeben.

Damit ist der in Fig. 9 dargestellte Zyklus abgeschlossen. Im nächsten Zyklus wird der nächste Wert $u_j$ der verrauschten Folge von Nulldurchgangsabständen $\{u_j\}$ eingelesen.

Ein Vorteil des in Fig. 9 dargestellten Algorithmus besteht darin, dass die entrauschte Signalfolge $\{\hat{t}_i\}$ dieselbe Anzahl von Nulldurchgängen aufweist wie die unverrauschte Signalfolge $\{t_i\}$. Dies ist für viele Detektionsverfahren wichtig, da zusätzliche Nulldurchgänge in der der Datendetektion zugrunde liegenden Signalfolge zu Detektionsfehler führen können. Ein weiterer Vorteil besteht darin, dass die erzeugte Signalfolge $\{\hat{t}_i\}$ aufgrund der Rauschreduktion besser mit der idealen (unverrauschten) Signalfolge $\{t_i\}$ korrespondiert als die ursprüngliche Nulldurchgangsfolge $\{u_j\}$. Hiervon profitieren besonders solche Detektionsverfahren, die aufgrund der Nulldurchgangsabstände das unverrauschte Signal rekonstruieren.

Das erfindungsgemäße Verfahren weist, wie bereits erwähnt, eine prinzipbedingte Überlegenheit gegenüber konventionellen Filter-basierten Ansätzen auf. Ursache hierfür ist, dass das erfindungsgemäße Verfahren spezifische statistische Zusammenhänge (welche durch die Auswirkung der Limiter-Nicht-Linearität auf das phasenmodulierte Signal entstehen) zwischen den Nulldurchgangsabständen ausnutzt, die durch eine Filterung prinzipiell nicht berücksichtigt werden können.

**Patentansprüche**

1. Verfahren zur Erzeugung einer rauschreduzierten Signalfolge aus einer verrauschten Signalfolge bestehend aus Werten, die für die zeitliche Lage von Durchgängen eines verrauschten winkelmodulierten Signals durch einen Schwellwert charakteristisch sind, mit den Schritten:

(a) Entscheiden (102), ob zu einem Wert der verrauschten Signalfolge ein Wert der rauschreduzierten Signalfolge erzeugt werden soll;

(b) falls zu dem Wert der verrauschten Signalfolge ein Wert der rauschreduzierten Signalfolge erzeugt werden soll, Aktualisieren (109) der rauschreduzierten Signalfolge durch einen neuen Wert, wobei dieser Wert der rauschreduzierten Signalfolge unter Berücksichtigung von früheren Werten der verrauschten Signalfolge, zu denen keine Werte der rauschreduzierten Signalfolge erzeugt wurden, berechnet (106) wird.

**2.** Verfahren nach Anspruch 1,
**dadurch gekennzeichnet, dass**
der Schritt (a) die Schritte ausweist:

- Vergleichen des Wertes der verrauschten Signalfolge mit einem Entscheidungs-Schwellwert;

-- sofern der Wert der verrauschten Signalfolge größer als der Entscheidungs-Schwellwert (U) ist, Entscheiden, dass zu diesem Wert ein Wert der rauschreduzierten Signalfolge erzeugt werden soll; andernfalls
-- Entscheiden, dass zu diesem Wert kein Wert der rauschreduzierten Signalfolge erzeugt werden soll.

**3.** Verfahren nach Anspruch 1 oder 2,
**dadurch gekennzeichnet, dass**
der Schritt (b) die folgenden Schritte umfasst:

(b1) Speichern (103) des aktuellen Wertes $u_j$ der verrauschten Signalfolge, welcher größer als der Entscheidungs-Schwellwert ist;
(b2) Berechnen (106) des Wertes $\hat{t}_i$ der rauschreduzierten Signalfolge aus vorhergehenden Werten $u_{j-1}$, $u_{j-2}$, ..., $u_{j-B}$ der verrauschten Signalfolge und aus einem Wert $a_0$, welcher sich nach einer vorgegebenen Rechenvorschrift aus dem zuletzt aufgetretenen Wert $u_{j-B-1}$ der verrauschten Signalfolge ergibt, welcher größer als der Entscheidungs-Schwellwert (U) ist, wobei B die Anzahl der Werte der verrauschten Signalfolge zwischen dem aktuellen Wert $u_j$ und dem zuletzt aufgetretenen Schwellwertüberschreitenden Wert $u_{j-B-1}$ der verrauschten Signalfolge angibt; und
(b3) Aktualisieren (107) des Wertes $a_0$ nach der vorgegebenen Rechenvorschrift.

**4.** Verfahren nach Anspruch 3,
**dadurch gekennzeichnet, dass**
im Schritt (b2) der Wert $\hat{t}_i$ der rauschreduzierten Signalfolge nach folgender Beziehung berechnet wird

$$
\hat{t}_i = \begin{cases} a_0 & , B = 0 \\ a_0 + b_0 & , B = 2, \\ a_0 + b_0 + \ldots + b_{(B/2)-2} + \dfrac{b_{(B/2)-1} + b_{(B/2)}}{2} & , B > 2 \end{cases}
$$

wobei $b_0$ bis $b_{B-1}$ die vorausgegangenen Werte $u_{j-B}$ bis $u_{j-1}$ bezeichnen, und dass
die in Schritt (b3) eingesetzte Rechenvorschrift zum Aktualisieren (107) des Wertes $a_0$ lautet:

$$
a_0 = \begin{cases} a_1 & , B = 0 \\ a_1 + b_{B-1} & , B = 2. \\ a_1 + \dfrac{b_{(B/2)-1} + b_{(B/2)}}{2} + b_{(B/2)+1} + \ldots + b_{B-1} & , B > 2 \end{cases}
$$

**5.** Verfahren nach einem der vorhergehenden Ansprüche,

**dadurch gekennzeichnet, dass**
die verrauschte Signalfolge aus dem verrauschten winkelmodulierten Signal durch eine Limiter-Diskriminator-Schaltung (5; 6, 7) erzeugt wird.

6. Verfahren nach einem der vorhergehenden Ansprüche,
**dadurch gekennzeichnet, dass**
das winkelmodulierte Signal ein CPFSK-moduliertes Signal, insbesondere ein GFSK-moduliertes Signal ist.

7. Verfahren nach einem der vorhergehenden Ansprüche,
**dadurch gekennzeichnet, dass**
das Verfahren in Bluetooth- oder DECT-Systemen verwendet wird.

8. Vorrichtung zur Erzeugung einer rauschreduzierten Signalfolge aus einer verrauschten Signalfolge bestehend aus Werten, die für die zeitliche Lage von Durchgängen eines verrauschten winkelmodulierten Signals durch einen Schwellwert charakteristisch sind, mit

- einem Mittel (9) zum Entscheiden, ob zu einem Wert der verrauschten Signalfolge ein Wert der rauschreduzierten Signalfolge erzeugt werden soll;
- einem Mittel (9) zum Berechnen dieses Wertes der rauschreduzierten Signalfolge unter Berücksichtigung von früheren Werten der verrauschten Signalfolge, zu denen keine Werte der rauschreduzierten Signalfolge erzeugt wurden, und
- einem Mittel (9) zum Aktualisieren der rauschreduzierten Signalfolge durch den berechneten Wert.

9. Vorrichtung nach Anspruch 8,
**dadurch gekennzeichnet, dass**
das Mittel (9) zum Entscheiden einen Schwellwert-Vergleicher umfasst, der die Werte der verrauschten Signalfolge mit einem Entscheidungs-Schwellwert vergleicht, wobei in dem Fall, dass der Wert der verrauschten Signalfolge größer als der Entscheidungs-Schwellwert ist, zu diesem Wert ein Wert der rauschreduzierten Signalfolge erzeugt werden soll, und andernfalls zu diesem Wert kein Wert der rauschreduzierten Signalfolge erzeugt werden soll.

10. Vorrichtung nach Anspruch 8 oder 9,
**gekennzeichnet durch**
eine Limiter-Diskriminator-Schaltung (5; 6, 7) zur Erzeugung der verrauschten Signalfolge aus dem verrauschten winkelmodulierten Signal.

**Claims**

1. Method for generating a reduced-noise signal sequence from a noisy signal sequence comprising values which are characteristic of the temporal position of crossings of a noisy angle-modulated signal through a threshold value, said method having the following steps:

(a) a decision is made (102) as to whether a value of the reduced-noise signal sequence is to be generated for a value of the noisy signal sequence;
(b) if a value of the reduced-noise signal sequence is to be generated for the value of the noisy signal sequence, the reduced-noise signal sequence is updated (109) by means of a new value, this value of the reduced-noise signal sequence being calculated (106) taking into account earlier values of the noisy signal sequence for which no values of the reduced-noise signal sequence were generated.

2. Method according to Claim 1,
**characterized in that**
step (a) has the following steps:

- the value of the noisy signal sequence is compared with a decision threshold value;

-- if the value of the noisy signal sequence is greater than the decision threshold value (U), a decision is made that a value of the reduced-noise signal sequence is to be generated for said value; otherwise
-- a decision is made that no value of the reduced-noise signal sequence is to be generated for said value.

3. Method according to Claim 1 or 2,
**characterized in that**
step (b) comprises the following steps:

> (b1) the current value $u_j$ of the noisy signal sequence is stored (103), said value being greater than the decision threshold value;
> (b2) the value $\hat{t}_i$ of the reduced-noise signal sequence is calculated (106) from previous values $u_{j-1}$, $u_{j-2}$, ..., $u_{j-B}$ of the noisy signal sequence and from a value $a_0$ which results, according to a prescribed computation rule, from that value $u_{j-B-1}$ of the noisy signal sequence which occurred last and is greater than the decision threshold value (U), B indicating the number of values of the noisy signal sequence between the current value $u_j$ and that value $u_{j-B-1}$ of the noisy signal sequence which occurred last and exceeds the threshold value; and
> (b3) the value $a_0$ is updated (107) according to the prescribed computation rule.

4. Method according to Claim 3,
**characterized in that,**
in step (b2), the value $\hat{t}_i$ of the reduced-noise signal sequence is calculated according to the following relationship

$$\hat{t}_i = \begin{cases} a_0 & , B = 0 \\ a_0 + b_0 & , B = 2, \\ a_0 + b_0 + ... + b_{(B/2)-2} + \dfrac{b_{(B/2)-1} + b_{(B/2)}}{2} & , B > 2 \end{cases}$$

where $b_0$ to $b_{B-1}$ denote the previous values $u_{j-B}$ to $u_{j-1}$, and **in that** the computation rule used in step (b3) to update (107) the value $a_0$ is:

$$a_0 = \begin{cases} a_1 & , B = 0 \\ a_1 + b_{B-1} & , B = 2. \\ a_1 + \dfrac{b_{(B/2)-1} + b_{(B/2)}}{2} + b_{(B/2)+1} + ... + b_{B-1} & , B > 2 \end{cases}$$

5. Method according to one of the preceding claims,
**characterized in that**
the noisy signal sequence is generated from the noisy angle-modulated signal using a limiter-discriminator circuit (5; 6, 7).

6. Method according to one of the preceding claims,
**characterized in that**
the angle-modulated signal is a CPFSK-modulated signal, in particular a GFSK-modulated signal.

7. Method according to one of the preceding claims,
**characterized in that**
the method is used in Bluetooth or DECT systems.

8. Apparatus for generating a reduced-noise signal sequence from a noisy signal sequence comprising values which are characteristic of the temporal position of crossings of a noisy angle-modulated signal through a threshold value, said apparatus having

> - a means (9) for deciding whether a value of the reduced-noise signal sequence is to be generated for a value of the noisy signal sequence;
> - a means (9) for calculating said value of the reduced-noise signal sequence taking into account earlier values of the noisy signal sequence for which no values of the reduced-noise signal sequence were generated, and
> - a means (9) for updating the reduced-noise signal sequence by means of the calculated value.

**9.** Apparatus according to Claim 8,
**characterized in that**
the decision means (9) comprises a threshold value comparator which compares the values of the noisy signal sequence with a decision threshold value, in which case, if the value of the noisy signal sequence is greater than the decision threshold value, a value of the reduced-noise signal sequence is to be generated for said value, and, otherwise, no value of the reduced-noise signal sequence is to be generated for said value.

**10.** Apparatus according to Claim 8 or 9,
**characterized by**
a limiter-discriminator circuit (5; 6, 7) for generating the noisy signal sequence from the noisy angle-modulated signal.

**Revendications**

**1.** Procédé de production d'une séquence de signal à bruit réduit à partir d'une séquence de signal bruitée, constituée de valeurs qui sont caractéristiques de la position dans le temps de passages d'un signal bruité à modulation angulaire par une valeur de seuil, ledit procédé comportant les étapes consistant à :

(a) décider (102) si, pour une valeur de la séquence de signal bruitée, une valeur de la séquence de signal à bruit réduit doit être produite ;
(b) dans le cas où, pour la valeur de la séquence de signal bruitée, une valeur de la séquence de signal à bruit réduit doit être produite, actualiser (109) la séquence de signal à bruit réduit par une nouvelle valeur, cette valeur de la séquence de signal à bruit réduit étant calculée (106) en tenant compte de valeurs antérieures de la séquence de signal bruitée pour lesquelles aucune valeur de la séquence de signal à bruit réduit n'a été produite.

**2.** Procédé selon la revendication 1, **caractérisé en ce que** l'étape (a) comporte les étapes suivantes consistant à :

- comparer la valeur de la séquence de signal bruitée à une valeur de seuil de décision ;

-- lorsque la valeur de la séquence de signal bruitée est supérieure à la valeur de seuil de décision (U), décider que, pour cette valeur, une valeur de la séquence de signal à bruit réduit doit être produite ; sinon
-- décider que, pour cette valeur, une valeur de la séquence de signal à bruit réduit ne doit pas être produite.

**3.** Procédé selon la revendication 1 ou 2, **caractérisé en ce que** l'étape ((b) comporte les étapes suivantes consistant à :

(b1) mémoriser (103) la valeur actuelle $u_j$ de la séquence de signal bruitée, laquelle valeur est supérieure à la valeur de seuil de décision ;
(b2) calculer (106) la valeur $\hat{t}_j$ de la séquence de signal à bruit réduit à partir de valeurs antérieures $u_{j-1}$, $u_{j-2}$, ..., $u_{j-B}$ de la séquence de signal bruitée et à partir d'une valeur $a_0$ qui est obtenue conformément à une règle de calcul prescrite à partir de la valeur $u_{j-B-1}$, survenue en dernier, de la séquence de signal bruitée, laquelle valeur $u_{j-B-1}$ est supérieure à la valeur de seuil de décision (U), B indiquant le nombre de valeurs de la séquence de signal bruité entre la valeur actuelle $u_j$ et la valeur $u_{j-B-1}$, survenue en dernier et supérieure à la valeur de seuil, de la séquence de signal bruitée ; et
(b3) actualiser (107) la valeur $a_0$ conformément à la règle de calcul prescrite.

**4.** Procédé selon la revendication 3, **caractérisé en ce que** la valeur $\hat{t}_j$ de la séquence de signal à bruit réduit est calculée à l'étape (b2) conformément à la relation suivante :

$$\hat{t}_0 = \begin{cases} a_0 & , B = 0 \\ a_0 + b_0 & , B = 2 \\ a_0 + b_0 + ... + b_{(B/2)-2} + \dfrac{b_{(B/2)-1} + b_{(B/2)}}{2} & , B > 2 \end{cases}$$

où $b_0$ à $b_{B-1}$ désignent les valeurs antérieures $u_{j-B}$ à $u_{j-1}$, et **en ce que**
la règle de calcul utilisée à l'étape (b3) pour actualiser (107) la valeur $a_0$ est donnée par :

$$a_0 = \begin{cases} a_1 & ,B = 0 \\ a_1 + b_{B-1} & ,B = 2 \\ a_1 + \dfrac{b_{(B/2)-1} + b_{(B/2)}}{2} + b_{(B/2)+1} + \ldots + b_{B-1} & ,B > 2 \end{cases}$$

**5.** Procédé selon l'une des revendications précédentes, **caractérisé en ce que** la séquence de signal bruité est produite à partir du signal bruité à modulation angulaire par un circuit limiteur-discriminateur (5 ; 6, 7).

**6.** Procédé selon l'une des revendications précédentes, **caractérisé en ce que** le signal à modulation angulaire est un signal à modulation CPFSK, notamment un signal à modulation GFSK.

**7.** Procédé selon l'une des revendications précédentes, **caractérisé en ce que** le procédé est utilisé dans des systèmes Bluetooth ou DECT.

**8.** Dispositif de production d'une séquence de signal à bruit réduit à partir d'une séquence de signal bruitée constituée de valeurs qui sont caractéristiques de la position dans le temps de passages d'un signal bruité à modulation angulaire par une valeur de seuil, ledit dispositif comportant

 - un moyen de décision (9) permettant de décider si, pour une valeur de la séquence de signal bruitée, une valeur de la séquence de signal à bruit réduit doit être produite ;
 - un moyen de calcul (9) permettant de calculer cette valeur de la séquence de signal à bruit réduit en tenant compte de valeurs antérieures de la séquence de signal bruitée pour lesquelles une valeur de la séquence de signal à bruit réduit ne doit pas être produite, et
 - un moyen d'actualisation (9) permettant d'actualiser la séquence de signal à bruit réduit par la valeur calculée.

**9.** Dispositif selon la revendication 8, **caractérisé en ce que** le moyen de décision (9) comporte un comparateur à valeur de seuil, qui compare les valeurs de la séquence de signal bruitée à une valeur de seuil de décision ; dans le cas où la valeur de la séquence de signal bruitée est supérieure à la valeur de seuil de décision, il sera produite pour cette valeur une valeur de la séquence de signal à bruit réduit, et sinon aucune valeur de la séquence de signal à bruit réduit ne sera produite pour cette valeur.

**10.** Dispositif selon la revendication 8 ou 9, **caractérisé par** un circuit limiteur-discriminateur (5 ; 6, 7) destiné à produire la séquence de signal bruitée à partir du signal bruité à modulation angulaire.

EP 1 665 702 B1

**FIG 1**

$$x(t) = A_T \cos(\omega_0 t + \phi_T(t))$$

$$r(t) = g(t) * x(t) + n(t)$$

$$y(t) = A\cos(\omega_{IF} t + \phi(t) + n_\phi(t))$$

**FIG 2**

$$y(t) = A\cos(\omega_{IF} t + \phi(t) + n_\phi(t))$$

## FIG 3

## FIG 4

EP 1 665 702 B1

## FIG 5

Nulldurchgänge von y(t)

## FIG 6

Nulldurchgänge von $y_{noise}(t)$

13

FIG 7

FIG 8

# FIG 9

$$\{u_j\}$$

Lese nächsten Wert $u_j$ — 101

$u_j$

102 — $u_j \geq U$

ja → $a_1 = u_j$

nein → $b_B = u_j$

Aktualisieren des Vektors $a = \begin{bmatrix} a_0 \\ a_1 \end{bmatrix}$ — 103

Aktualisieren des Vektors $b = \begin{bmatrix} b_0 \\ b_1 \\ \vdots \\ b_{B-1} \end{bmatrix}$ — 104

$B = B+1$ — 105

106 —

Erzeugen der rauschreduzierten Folge

$$\hat{t}_i = \begin{cases} a_0 & , B=0 \\ a_0 + b_0 & , B=2 \\ a_0 + b_0 + \cdots + b_{(B/2)-2} + \dfrac{b_{(B/2)-1} + b_{(B/2)}}{2} & , B>2 \end{cases}$$

107

Aktualisieren von $a_0$

$$a_0 = \begin{cases} a_1 & , B=0 \\ a_1 + b_{B-1} & , B=2 \\ a_1 + \dfrac{b_{(B/2)-1} + b_{(B/2)}}{2} + b_{(B/2)+1} + \cdots + b_{B-1} & , B>2 \end{cases}$$

$\hat{t}_i$

Schreibe nächsten Wert $\hat{t}_i$ — 109

$B = 0$ — 108

$$\{\hat{t}_i\}$$